(19) Europäisches Patentamt
European Patent Office
Office européen des brevets

(11) Publication number: 0 266 863 B1

(12) # EUROPEAN PATENT SPECIFICATION

(45) Date of publication of the patent specification: 28.03.90

(51) Int. Cl.⁴: C11D 3/00, C11D 3/37

(21) Application number: 87307075.9

(22) Date of filing: 10.08.87

(54) **Antifoam ingredient.**

(30) Priority: 12.08.86 GB 8619634

(43) Date of publication of application: 11.05.88 Bulletin 88/19

(45) Publication of the grant of the patent: 28.03.90 Bulletin 90/13

(84) Designated Contracting States: CH DE ES FR GB IT LI NL SE

(56) References cited:
EP-A-0 022 998
EP-A-0 109 247
DE-A-2 338 468
FR-A-2 338 991

(73) Proprietor: UNILEVER PLC, Unilever House Blackfriars P.O. Box 68, London EC4P 4BQ(GB)
(84) Designated Contracting States: GB

(73) Proprietor: UNILEVER NV, Burgemeester s'Jacobplein 1 P.O. Box 760, NL-3000 DK Rotterdam(NL)
(84) Designated Contracting States: CH DE ES FR IT LI NL SE

(72) Inventor: Garrett, Peter Rober, Charlesville Cilcain Road, Pantymwyn - Clwyd - Wales(GB)
Inventor: Hewitt, Malcolm, 8 Kentridge Drive, Great Sutton Cheshire L66 2SY(GB)
Inventor: Iley, William John, 19 Venables Drive Spital, Bebington Wirral L63 9LY(GB)
Inventor: Knight, Peter Cory, 71 Mooreside Avenue, Neston Cheshire L64 6QS(GB)
Inventor: Pilidis, Aquiles Panagiotis, 70 Rue de Verdun, F-59249 Aubers(FR)
Inventor: Tai, Ho Tan, 19 Rue G Tell, F-59000 Lille(FR)
Inventor: Taylor, Thomas, 19 Chantry Avenue Hertford, Northwich Cheshire CW8 1LZ(GB)
Inventor: Yorke, John William Harold, 4 Meadow Close, Neston Cheshire L64 9SH(GB)

(74) Representative: Fransella, Mary Evelyn et al, Unilever PLC Patents Division P.O. Box 68 Unilever House, London EC4P 4BQ(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

### TECHNICAL FIELD

The invention relates to a particulate antifoam ingredient based on sodium carbonate which is particularly suitable for incorporation into powdered detergent products, and to processes for the production of the antifoam ingredient.

### BACKGROUND

Detergent products comprising anionic and/or nonionic surfactants which are particularly suitable for fabric washing generally have a tendency in use to produce excessive foam. This can be a problem particularly with drum-type washing machines, and it is accordingly usual to include an antifoam agent in the detergent formulation to reduce or eliminate this tendency to produce excessive foam.

Excessive foam derived from detergent products containing anionic and/or nonionic surfactants can for example be controlled to a limited extent by the addition of soap, or by the incorporation of certain oils, such as hydrocarbons or silicone oils, or particles such as hydrophobic silica, or mixtures of such materials.

It has, for example, been proposed in GB 1 571 501 (Unilever) to provide a detergent powder composition comprising a lather controller consisting of a polyvalent salt of an alkyl phosphoric acid, such as calcium stearyl phosphate, and a hydrocarbon. The lather controller can be sprayed onto the detergent powder prior to packaging.

Although such antifoams are highly effective in reducing the tendency of a freshly manufactured detergent product to produce excessive foam, there is still a substantial risk that the antifoam activity will diminish on storage in a detergent powder. This is believed to be due to migration of some of the antifoam active substances, particularly those of an oily nature, into the surrounding powder or even the packaging material. This can happen more rapidly when such powders are stored at temperatures above room temperature (20°C), and after a period of storage of a few weeks the activity of the antifoam agent can be severely impaired.

It is accordingly desirable to incorporate the antifoam agents in the detergent powder during manufacture in a form in which they are protected against premature deactivation during storage, so that their effectiveness in controlling excessive foam production, both at low and at high washing temperatures, is not diminished.

It has already been suggested that antifoam active substances should be added to detergent powders in the form of granules or particles in which the antifoam active substance is sorbed onto a carrier material: the carrier materials suggested in the prior art include various inorganic salts. Use of a particulate carrier material can prevent or reduce premature loss during storage of any oily antifoam active substance by migration, provided that a suitable carrier material is chosen.

For example, EP 22 998A (Henkel) discloses antifoam granules prepared by spray-drying a slurry of sodium silicate, sodium silicate/sodium tripolyphosphate, sodium tripolyphosphate/sodium sulphate or sodium tripolyphosphate/sodium silicate/sodium sulphate. EP 109 247A (Unilever) discloses sodium perborate monohydrate and zeolite as carrier materials for antifoam granules. DE 3 013 292A (BASF) discloses antifoam granules prepared by spraying a molten antifoam substance onto a finely divided porous carrier material such as silica, sodium tripolyphosphate or zeolite. Sodium carbonate appears in lists of possible materials for use as carriers for antifoam granules in GB 1 571 501 (Unilever), EP 142 910A (Procter & Gamble), EP 63 346A (Henkel), EP 36 162A (Henkel), EP 150 386A (Henkel), EP 13 028A (Henkel) and EP 210 731A (Dow Corning), but it is never preferred or exemplified.

We have now discovered that certain highly porous sodium carbonate-based materials are especially effective carriers for antifoam active substances, and particularly for oily antifoam active substances. The pore volumes of the materials in question are sufficient to entrap the antifoam active substances within the carrier, the particles so obtained remaining non-tacky, but in the wash liquor rapid and efficient release of the active substance ccurs at both high and low wash temperatures. The effectiveness of the antifoam ingredient is thereby retained until it is needed at the point of use.

The carbonate-based carrier materials used in accordance with the present invention are also characterised by a small pore size, so that the antifoam active substances are released into the wash liquor in the form of smaller than usual particles or droplets.

### DEFINITION OF THE INVENTION

Accordingly, the invention provides a particulate antifoam ingredient suitable for incorporation into a detergent powder composition, said ingredient comprising:

(i) an antifoam active material comprising at least one hydrophobic antifoam active substance at least partially liquid at a temperature within the range of from 5 to 90°C, sorbed onto

(ii) a porous absorbent water-soluble inorganic carrier comprising sodium carbonate and having a mean particle diameter not exceeding 2000 µm, a pore volume of from 0.2 to 1.0 $cm^3/g$ and a median pore diameter not greater than 20 µm.

DISCLOSURE OF THE INVENTION

THE ANTIFOAM ACTIVE MATERIAL

The antifoam ingredient of the invention comprises an antifoam active material, that is a substance or mixture of substances capable of controlling the production of foam at a desirable level, when employed in conjunction with a detergent product, for example in the washing of fabrics in a front loading automatic washing machine.

The antifoam active material includes at least one hydrophobic antifoam active substance at least partially liquid at a temperature of from 5 to 90°C, a range corresponding to the range of wash temperatures normally encountered.

Advantageously, the antifoam active material comprises:

(a) the hydrophobic antifoam active substance at least partially liquid at a temperature of from 5 to 90°C, which is selected from hydrocarbons, polysiloxanes and mixtures thereof;
and, optionally,
(b) an antifoam promoter selected from
(b) (i) alkyl phosphoric acids or salts thereof, the acids having the structure:

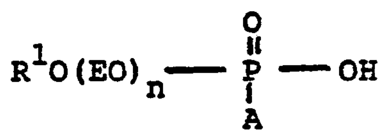

(1)

Where A is -OH or $R^2O(EO)_m$-, $R^1$ and $R^2$ are the same or different $C_{12}$ to $C_{24}$, straight or branched chain, saturated or unsaturated alkyl groups, m and n are the same or different and are O, or an integer of from 1 to 6;
(b)(ii) hydrophobic silica; and
(b)(iii) mixtures thereof.

(a) The hydrophobic antifoam active substance

(a) (i) The Hydrocarbon

Hydrocarbons which can be employed as antifoam actives are those which usually liquefy at a temperature of 90°C or below. Preferred hydrocarbons for use in the present invention are those which liquefy at temperatures from 20 to 90°C: these may be those which are normally solid or semi-solid at room temperature and which are sometimes referred to as waxes, or they can comprise a mixture of normally liquid and normally solid or semi-solid hydrocarbons.

These hydrocarbons are either natural in origin, in which case they can be derived from mineral, vegetable or animal sources, or they can be synthetic in nature.

The preferred hydrocarbons are those which liquefy at a temperature in the range of from about 30°C to about 70°C, that is lower than the intended wash temperatures of a detergent composition employed in the washing of fabrics in an automatic washing machine.

The preferred hydrocarbons are of mineral origin, especially those derived from petroleum, including microcrystalline and oxidised microcrystalline waxes, petroleum jelly ("VASELINE") and paraffin waxes. Petroleum jelly is a semi-solid hydrocarbon wax, usually having a liquefication point of from about 35°C to 50°C, and comprising a mixture of normally liquid hydrocarbons and normally solid hydrocarbons. Synthetic waxes, such as Fischer-Tropsch and oxidised Fischer-Tropsch waxes, or Montan waxes, or natural waxes, such as beeswax, candelilla and carnauba waxes can be used if desired. Any of the waxes described can be used alone or in admixtures with other hydrocarbon waxes.

The hydrocarbons should preferably not have a very high saponification value, for example, not in excess of 100. It is an advantage to include an emulsifying or stabilising agent for the hydrocarbon in the antifoam ingredient.

If desired, the preferred hydrocarbons melting at temperatures in the range of from 20 to 90°C, preferably from 30 to 70°C, may be supplemented by lower-melting point hydrocarbons which are normally liquid.

Examples of suitable normally liquid hydrocarbons are mineral, vegetable or animal oils of which colourless mineral oils are preferred. Either light or heavy mineral oil or mixtures thereof may be employed, but of course any liquid hydrocarbon used must be of low volatility at normal fabric washing temperatures. Other oils which could be used if desired are vegetable oils such as sesame oil, cotton seed oil, corn oil, sweet almond oil, olive oil, wheat germ oil, rice bran oil, or peanut oil, or animal oils such as lanolin, neat's foot oil, bone oil, sperm oil or cod liver oil. Any such oils used should not be highly coloured, of strong odour or otherwise unacceptable for use in a detergent composition.

Further examples of normally liquid hydrocarbon materials, that is hydrocarbons which are normally liquid at wash temperatures below 40°C, include hydrocarbons usually having a melting point of from -40°C to 5°C and usually containing from 12 to 40 carbon atoms in the molecule. The normally liquid hydrocarbon will usually have a minimum boiling point of not less than 110C. Liquid paraffins, preferably of the naphthenic or paraffinic type, also known as mineral white oil are preferred. Particularly suitable are those chosen from mineral oils such as spindle oil (Velocite 6:Mobil), paraffin oil and other liquid oils such as those in the WTO-5 series as available from British Petroleum.

The preferred hydrocarbon used in the antifoam ingredient of the present invention is petroleum jelly.

<u>(a) (ii) The Polysiloxane</u>

Polysiloxanes which can be employed as antifoam actives have the structure:

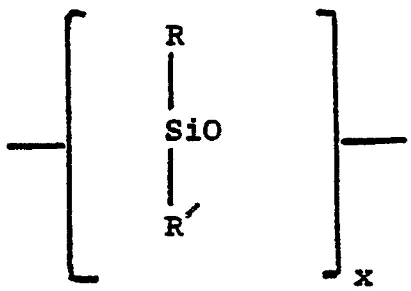

where R and R' are the same or different alkyl or aryl groups having from 1 to 6 carbon atoms; and x is an integer of at least 20.

The preferred polysiloxanes are polydimethylsiloxanes, where both R and R' are methyl groups.

The polysiloxanes usually have a molecular weight of from 500 to 200 000 and are generally non-volatile, in that they have a kinematic viscosity of from 50 to $2 \times 10^6 mm^2/s$. Preferably, the polysiloxanes have a kinematic viscosity of from $5 \times 10^2$ to $5 \times 10^4 mm^2/s$, most preferably from $3 \times 10^3$ to $3 \times 10^4 mm^2/s$ at 25°C. The polysiloxane is generally end blocked with trimethylsilyl groups, but other end-blocking groups are also suitable.

Examples of suitable commercially available polysiloxanes are the polydimethyl siloxanes, "Silicone 200 Fluids", available from Dow Corning, having viscosities of from 50 to $5 \times 10^4 mm^2/s$.

For convenience, the term "silicone oil" will be used hereinafter to denote liquid polysiloxane.

<u>(b) The antifoam promoter</u>

Advantageously the antifoam ingredient of the invention may also com prise an antifoam promoter, that is a particulate substance which is capable of promoting the antifoam function of the antifoam active. The antifoam promoter will generally be a substance which is water insoluble and is deployed as finely divided solid particles when the antifoam ingredient is contacted with a large volume of water, for example in the control of foaming during the washing of fabrics. The antifoam promoter can also be a substance which is converted to finely divided solid water insoluble particles when contacted with calcium or magnesium ions normally present in hard water.

The antifoam promoter is preferably chosen from certain alkyl phosphoric acids or salts thereof, hydrophobic silica or mixtures of these materials.

<u>(b) (i) The alkyl phosphoric acid or salt thereof</u>

Alkyl phosphoric acids or salts thereof, which can be employed as antifoam promoters can be derived from acids having the structure:

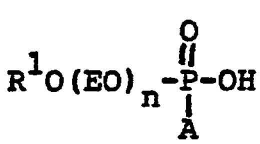 (1)

where A is -OH or $R^2O(EO)_m$-, $R^1$ and $R^2$ are the same or different, $C_{12}$-$C_{24}$, preferably $C_{16}$-$C_{22}$,

straight or branched chain, saturated or unsaturated alkyl groups, especially $C_{16}$-$C_{18}$ linear saturated groups, and m and n are the same or different and are O or an integer of from 1 to 6. Preferably A is -OH and n is O, so that the compound is a monoalkyl phosphoric acid, preferably with a linear alkyl group. If any ethylene oxide (EO) groups are present in the alkyl phosphoric acid, they should not be too long in relation to the alkyl chain length to make their respective calcium or magnesium salts soluble in water during use.

In practice, the alkyl phosphoric acid or salt is usually a mixture of both mono- and di-alkylphosphoric acid residues, with a range of alkyl chain lengths. Predominantly monoalkyl phosphates are usually made by phosphorylation of alcohols or ethyoxylated alcohols, when n or m is an integer of from 1 to 6, using a polyphosphoric acid. Phosphorylation may alternatively be accomplished using phosphorus pentoxide, in which case the mixed mono- and di-alkyl phosphates are produced. Under optimum reaction conditions, only small quantities of unreacted materials or by-products are produced, and the reaction products advantageously can be used directly in the antifoam ingredient.

The substituted phosphoric acids of structure (1) above are used as stated in acid or salt form, that is either as the partial salt, or preferably as the full salt. When the antifoam ingredient comprising an alkyl phosphoric acid is added to the detergent composition, it will normally be neutralised by the more basic ingredients of the composition, to form usually the sodium salt, when the detergent composition is dispersed in water. When using the composition in hard water, the insoluble calcium and/or magnesium salt can then be formed, but in soft water some of the alkyl phosphate can remain as the alkali metal, usually sodium, salt. In this case, the addition of calcium and/or magnesium ions, in the form of a water-soluble salt thereof is necessary to form the particulate, insoluble corresponding salts of the alkyl phosphate. If the alkyl phosphate is employed as the alkali metal or ammonium salt form, then again the calcium and/or magnesium salt is formed on use in hard water.

It is also possible to use a preformed insoluble alkyl phosphoric acid salt, with a polyvalent cation which is preferably calcium, although aluminium, barium, zinc, magnesium or strontium salts may alternatively be used. Mixtures of the insoluble alkyl phosphoric acid salts with the free acid or other soluble salts, such as alkali metal salts, can also be used if desired. The preferred insoluble alkyl phosphoric acid salts need not be totally water-insoluble, but they should be sufficiently insoluble that undissolved solid salt is present in the wash liquor, when the antifoam ingredient forms part of a detergent product employed in the laundering of fabrics.

The preferred alkyl phosphate used in accordance with the invention is stearyl phosphate.

(b) (ii) The Hydrophobic Silica

The antifoam promoter can also comprise a hydrophobic particulate silica. Any type of silica can be employed in the preparation of hydrophobic silica. Preferred examples are precipitated silica and pyrogenic silica which can be converted to a hydrophobic form by treatment, for example with chloro-alkylsilanes, especially dimethyldichlorosilane, or by treatment, for example with an alcohol, especially octanol. Other suitable agents can be employed in the preparation of hydrophobic silica.

The hydrophobic silica should preferably have a surface area of >$50m^2g^{-1}$ and a particle size of <10μm, preferably <3μm.

Examples of commercially available hydrophobic silicas include Sipernat (Trade Mark) D10 and D17 available from Degussa, Wacker (Trade Mark) HDK P100/M, available from Wacker-Chemie and Cabosil (Trade Mark) N70 TS available from Cabot Corp.

Also available commercially are mixtures of silicone oil and hydrophobic silica, for example, DB 100 available from Dow Corning, VP 1132 available from Wacker-Chemie, and Silcolapse (Trade Mark) 430 available from ICI. These materials may be prepared by a method in which the silica is rendered hydrophobic in situ: hydrophilic silica is mixed with silicone oil and heated with high shear rate stirring, for example, as described by S Ross and G Nishioka in J Colloid and Interface Science, Vol 65(2), June 1978, page 216.

(b) (iii) Other antifoam promoters

Phosphorus-free antifoam promoters that may be used as alternatives or supplements to the alkyl phosphoric acid salts (b)(i) mentioned above are nitrogen-containing compounds having the formulae:

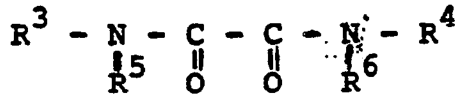

(2)

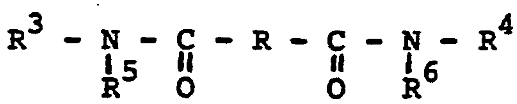

(3)

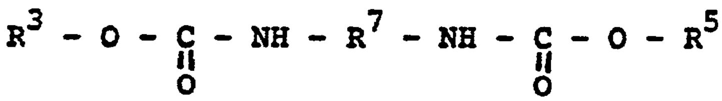

(4)

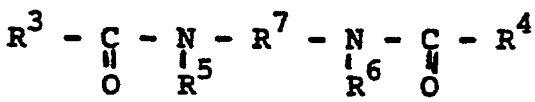

(5)

where $R^3$ and $R^4$ are the same or different $C_5$ to $C_{25}$ aliphatic groups, $R^5$ to $R^6$ are hydrogen, or the same or different $C_1$ to $C_{22}$ aliphatic groups; and $R^7$ is a $C_1$ to $C_9$ aliphatic group.

The preferred nitrogen compounds are those having the structure (5), for example, those where $R^3$ and $R^4$ are the same or different $C_{14}$ to $C_{22}$ aliphatic groups.

The most preferred nitrogen compounds are alpha, omega-dialkylamide alkanes, especially alpha, omega-distearylamide methane or ethane (also known as methylene and ethylene distearamides) having the structure:

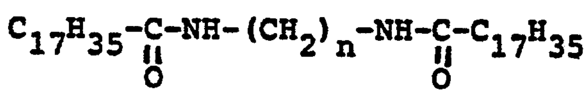

(6)

where n is the integer 1 or 2.

The nitrogen compound antifoam promoters are particularly suitable for use in detergent compositions which, for environmental reasons, contain little or no phosphorus-containing compounds.

If desired, the antifoam active material contained in the antifoam ingredient of the invention may additionally or alternatively comprise antifoam active substances and/or antifoam promoters other than those specified above.

Especially preferred combinations of antifoam active substances (oily) and antifoam promoters (particulate) or precursors thereof are the following:

(a) the active, silicone together with the promoter, hydrophobic silica, commercially available examples of which are DB 100 available from Dow Corning, VP 1132 available from Wacker and Silcolapse (Trade Mark) 430 available from ICI, as mentioned previously.

(b) the active, hydrocarbon together with the promoter alkyl phosphoric acid salt, an example of which is petroleum jelly and stearyl phosphate (e.g. Alf (Trade Mark) 5 available from Lankro Chemicals; preferred weight ratio of hydrocarbon to stearyl phosphate is 90:10, most preferably 60:40;

(c)the actives, hydrocarbon and a silicone, together with the promoters, alkyl phosphate and hydrophobic silica.

Combination (c) is of especial interest and will be discussed in more detail below under "Preferred Embodiment of the Invention".

It may be necessary to exercise care when preparing mixtures of antifoam active substance and promoter, in order to obtain a blend which is suitable subsequently to applying to a porous, absorbent carbonate-based carrier.

THE POROUS INORGANIC CARRIER

The carrier for the antifoam active substances is a porous water-soluble inorganic salt in particulate form, comprising or consisting of sodium carbonate.

In order to provide the necessary absorbent properties for the antifoam substances, the carrier should have a pore volume of from 0.2 to 1.0 $cm^3/g$, preferably from 0.25 to 1.0 $cm^3/g$, a median pore diameter (i.e. pore size) of not greater than 20 μm and a mean particle diameter not exceeding 2000 μm. Preferably the mean particle diameter will be from 80 to 2000 μm. These pore volume, pore diameter and particle diameter ranges ensure effective sorption of antifoam components into the carrier particles, while preventing desorption of antifoam components into a detergent powder, when combined therewith during normal storage prior to sale.

Pore volumes and pore diameters may be measured accurately by the recognised technique of mercury porosimetry. Pore volume may be determined more rapidly by liquid titration.

Initially a median pore diameter of not greater than 10 µm was believed to be essential, but subsequent work showed that materials having a median pore diameter up to 20 µm could be used as carrier materials in accordance with the invention.

Advantageously the carrier material has a surface area greater than 1 $m^2g$.

It is to be understood that the carrier particles can be crystalline structures having a mean particle diameter of from 0.1 to 50 µm. These are generally known as primary particles. Groups of such primary particles become agglomerated to form secondary particles or carrier particles or agglomerates having a mean particle diameter of at least 80 µm as defined above.

It is an essential feature of the invention that the carrier particles consist of or include sodium carbonate. One suitable material that is available as an article of commerce is light soda ash, a form of sodium carbonate which possesses suitable pore volume, size and mean particle diameter. The mean particle diameter of this material is generally in the range of from 90 to 130 µm, and the pore volume is generally in the range of from 0.28 to 0.33 ml/g.

Alternatively, the carrier may be prepared by a drying technique, especially but not exclusively spray-drying, carried out in such a manner that a material having especially favourable crystal size and porosity is obtained. Three carrier materials of this type that are of especial interest are crystal-growth-modified sodium carbonate monohydrate, crystal-growth-modified Burkeite (double salt of sodium carbonate and sodium sulphate), and crystal-growth-modified sodium sesquicarbonate. Crystal-growth-modified carbonate salts are described and claimed in EP 221 776A (Unilever), published on 27 May 1987. They are prepared by drying slurries comprising the requisite inorganic salts (and any other desired ingredients, such as detergent-active compounds) and an effective amount of a crystal growth modifier: the preferred drying technique is spray-drying.

The crystal growth modifier is an organic material having at least three carboxyl groups in the molecule. Monomeric polycarboxylates, for example, salts of ethylenediaminetetraacetic acid, nitrilotriacetic acid and citric acid, may be used but the levels required are rather high, for example, 5 to 10% by weight based on the total relevant inorganic salts. Preferred polycarboxylate crystal growth modifiers used to prepare these carrier materials are polymeric polycarboxylates having an average molecular weight of at least 1000, preferably from 1000 to 300 000, more preferably from 3000 to 100 000, especially from 3500 to 70 000 and most preferably from 10 000 to 70 000; all molecular weights quoted herein are those provided by the manufacturers. These materials may advantageously be used in amounts of from 0.1 to 20% by weight, preferably from 0.2 to 5% by weight, based on the total amount of relevant inorganic salts present.

Preferred crystal growth modifiers are homopolymers and copolymers of acrylic acid or maleic acid. Of especial interest are polyacrylates, acrylic acid/maleic acid copolymers, and acrylic phosphinates.

Particularly suitable polymers, which may be used alone or in combination, include the following:

salts of polyacrylic acid such as sodium polyacrylate, for example Versicol (Trade Mark) E5, E7 and E9 ex Allied Colloids, average molecular weights 3500, 27 000 and 70 000 respectively; Narlex (Trade Mark) LD 30 and 34 ex National Adhesives, average molecular weights 5000 and 25 000 respectively; Acrysol (Trade Mark) LMW-10, LMW-20, LMW-45 and A-IN ex Rohm & Haas, average molecular weights 1000, 2000, 4500 and 60 000; and Sokalan (Trade Mark) PAS ex BASF, average molecular weight 250 000;

ethylene/maleic anhydride copolymers, for example, the EMA (Trade Mark) series ex Monsanto;

methyl vinyl ether/maleic anhydride copolymers, for example, Gantrez (Trade Mark) AN119 ex GAF Corporation;

acrylic acid/maleic anhydride copolymers, for example, Sokalan (Trade Mark) CP5 ex BASF; and

acrylic phosphinates, for example, the DKW range ex National Adhesives and the Belsperse (Trade Mark) range ex Ciba-Geigy AG, as disclosed in EP 182 411A (Unilever).

Mixtures of any two or more crystal growth modifiers may, if desired, be used.

As mentioned previously, crystal-growth-modified carbonate-based carrier salts are prepared by drying, preferably spray-drying, slurries containing the crystal growth modifier and the relevant salt(s): sodium carbonate alone for modified sodium carbonate monohydrate, sodium carbonate and sodium sulphate for modified Burkeite, and sodium carbonate and sodium bicarbonate for modified sodium sesquicarbonate. If desired, all three salts can be present to give a mixed modified salt: and of course, in the case of the double salts, if the ratio of sodium carbonate to the other constituent salt is greater than stoichiometric, some modified sodium carbonate monohydrate will be formed in addition to the modified double salt.

In the case of modified Burkeite, the weight ratio of sodium carbonate to sodium sulphate is preferably at least 0.03:1, more preferably at least 0.1:1 and desirably at least 0.37:1, this last figure representing the stoichiometric ratio for Burkeite formation.

The stoichiometric ratio for sodium sesquicarbonate formation (sodium carbonate to sodium bicarbonate) is 1.26:1; preferably the weight ratio used when preparing this crystal-growth-modified material is within the range of from 1.5:1 to 1:1

It is essential that the crystal growth modifier be present in the slurry at a sufficiently early stage to influence the crystal growth of the carbonate carrier salt. It must accordingly be incorporated in the slurry not later than the time at which the sodium carbonate is added. If sodium sulphate and/or sodium bicarbonate is or are present, the crystal growth modifier is preferably incorporated not later than the addition of both the sodium carbonate and the other salt(s).

The preferred order of addition of the salts to a Burkeite slurry is for sodium sulphate to be added before sodium carbonate: this has been found to give a higher yield of more porous material. In this preferred procedure, the crystal growth modifier should be added to the slurry either before the addition of both salts, or after the addition of the sodium sulphate and before the addition of the sodium carbonate.

PREFERRED PROPORTIONS OF COMPONENTS

The total amount of antifoam active material (active substance plus optional promoter) which is carried by the porous inorganic carrier is preferably from 5 to 50%, more preferably from 10 to 40% and most preferably from 15 to 35% by weight of the total antifoam ingredient. Accordingly, the carrier preferably forms from 50 to 95%, more preferably from 60 to 90% and most preferably from 65 to 85% by weight of the total antifoam ingredient.

If both antifoam active substance and promoter are present the antifoam active substance(s) can form from 1 to 99% by weight and the antifoam promoter(s) can form from 99 to 1% by weight of the total antifoam substance carried by the porous carrier. Preferably the antifoam active substance constitutes from 75 to 90% of the total antifoam material present.

OPTIONAL COATING OF HYDROPHOBIC SILICA

According to a preferred embodiment of the invention the porous carrier, having sorbed thereon the antifoam active material, is superficially coated with a dusting of particulate hydrophobic silica whereby the antifoam ingredient is rendered non-tacky. If desired, in this embodiment of the invention, a different antifoam promoter, such as an alkyl phosphoric acid and/or salt thereof, may be included in the antifoam active material sorbed on the carrier. However, it is also within the scope of the invention, and indeed preferred, for the antifoam granule of the invention to include hydrophobic silica both in the antifoam active material and as an outer coating.

MANUFACTURE OF ANTIFOAM INGREDIENT

A further aspect of the invention provides a process for the manufacture of the antifoam ingredient according to the invention, which is then suitable for incorporation into detergent powder products, particularly those intended for the washing of fabrics in the domestic automatic washing machine.

The invention accordingly provides a process for the preparation of the antifoam ingredient of the invention, comprising the steps of

(i) incorporating the antifoam active material onto the particulate porous carrier, and
(ii) optionally coating the carrier with a dusting of particulate hydrophobic silica.

The process of the invention may also encompass an earlier step of preparing the carrier in the form of porous particles.

The antifoam material can be incorporated in and on the particles of the porous carrier by spraying with a liquefied mixture or melt of the antifoam substances, examples of which are given hereinbefore.

When more than one antifoam active substance and/or promoter are employed, then it is usually advantageous to add them sequentially.

Examples of some processes for preparing various antifoam ingredients in accordance with the invention are the following:

Process A

(i) Spraying a porous carbonate carrier with a silicone oil, a hydrocarbon or a mixture thereof as antifoam active; and, optionally,
(ii) subsequently coating the carrier with a dusting of hydrophobic silica as an antifoam promoter in the form of a finely divided particulate solid.

Process B

(i) Spraying a porous carbonate carrier with a mixture of a silicone oil and hydrophobic silica;
(ii) subsequently spraying the carrier with a mixture of a hydrocarbon and an alkyl phosphoric acid and/or a salt thereof, as herein defined; and
(iii) optionally coating the carrier with a dusting of hydrophobic silica to render it non-tacky.

Process C

(i) Spraying a porous carbonate carrier with a mixture comprising a silicone oil, hydrophobic silica, a hydrocarbon and an alkyl phosphoric acid and/or a salt thereof, as herein defined; and
(ii) optionally coating the carrier with a dusting of hydrophobic silica to render it non-tacky.

PREFERRED EMBODIMENT OF THE INVENTION

An especially preferred embodiment of the invention is represented by the following mixture of antifoam active substances and promoters, carried on light soda ash or polymer-modified Burkeite:

(a)(i) petroleum jelly;
(a)(ii) silicone oil;
(b)(i) as a first antifoam promoter, an alkyl phosphate such as stearyl phosphate; and
(b)(ii) as a second antifoam promoter, hydrophobic silica.

If desired, a silicone oil/hydrophobic silica mixture such as DB 100 mentioned above may be used to provide components (a)(ii) and (b)(ii). Advantageously an outer dusting of hydrophobic silica is additionally present.

Of the total antifoam substances present, the silicone oil and hydrophobic silica preferably constitute from 50 to 75% by weight, more preferably from 55 to 65% by weight, and the alkyl phosphate and petroleum jelly preferably constitute from 25 to 50% by weight, more preferably from 35 to 45% by weight.

The preferred method for the manufacture of this antifoam ingredient of the invention is essentially Process B given above. The antifoam active substances and promoters are sprayed on in two stages: first the silicone oil and hydrophobic silica, and subsequently the alkyl phosphate and petroleum jelly. It may be necessary to raise the temperature of the silicone oil slightly above ambient in order to reduce its viscosity to a level suitable for spraying. The alkyl phosphate/petroleum jelly mixture is semi-solid at ambient temperature and is generally heated to about 70-80°C befor spraying. The spraying operations may be carried out in any suitable apparatus in which liquids can be sprayed onto a moving bed of powder, for example, a pan granulator, a drum mixer, a Lodige (Trade Mark) mixer or a Schugi Flexomix (Trade Mark). It may be advantageous to carry out the two spraying operations in different vessels. If desired, the granular material obtained may be fluidised at ambient temperature for a short period. Oversized and undersized particles may then be removed by sieving.

The porosities of light soda ash and polymer-modified Burkeite are ideally suited to this combination of antifoam materials, in that they are just sufficient to accommodate an amount of silicone oil (plus hydrophobic silica) that will provide a suitable level of antifoam activity when the granules are dosed in a conventional amount to a detergent powder, as discussed in more detail below under "Detergent Compositions". The second spray-on, of alkyl phosphate and petroleum jelly, then serves to agglomerate the loaded carrier particles to form stable, free-flowing agglomerates: the amount of alkyl phosphate and petroleum jelly appropriate for optimum antifoam activity is also optimum for agglomerating the amount of loaded carrier particles present.

OPTIONAL NONIONIC SURFACTANT

One minor problem has sometimes been observed when detergent compositions incorporating antifoam granules according to the invention that contain silicone oil are used to wash fabrics in a domestic automatic washing machine: small oily spots may be observed on the washed fabrics after ironing, and on analysis these have been found to consist of silicone oil. It has been discovered that this problem can be alleviated by incorporating a small proportion of an emulsifying agent in the silicone oil before the latter component is sprayed on to the carrier. Preferred emulsifying agents are nonionic surfactants, especially ethoxylated aliphatic alcohols.

The amount of nonionic surfactant used is suitably about 15-25% by weight based on the silicone oil.

In the preferred process described in the previous section, the nonionic surfactant is sprayed onto the carrier together with the silicone oil and the hydrophobic silica; the alkyl phosphate and petroleum jelly are then sprayed on separately.

US 4 076 648 (Rosen/Union Carbide Corporation) discloses self-dispersible antifoam compositions comprising a lipophilic nonionic surfactant dispersed in a silicone oil. The nonionic surfactant preferably has a hydrophilic/lipophilic balance (HLB value) not greater than about 9.

It should be emphasised that the incorporation of nonionic surfactant in the silicone oil is by no means an essential feature of the invention. The problem of "spotting" has only been observed with particular batches of antifoam granules used under particular washing conditions.

It is also within the scope of the invention to use other emulsifying agents instead of nonionic surfactant.

DETERGENT COMPOSITIONS

The antifoam ingredient according to the invention is particularly suitable for incorporation in a detergent powder composition, in which case, such a composition can comprise from 0.1 to 5%, preferably from 0.2 to 3% and most preferably from 0.5 to 2% by weight of the antifoam ingredient. Detergent compositions of the invention also contain one or more detergent-active compounds and one or more detergency builders, and may contain other conventional ingredients, for example, bleaching materials, enzymes, antiredeposition agents and fluorescers.

Detergent active compounds

A detergent composition which is particularly suited to the incorporation of an antifoam ingredient according to the invention will generally comprise one or more detergent active compounds which can be chosen from soap and non-soap anionic, cationic, nonionic, amphoteric or zwitterionic detergent active compounds, and mixtures thereof. Many suitable detergent-active compounds are commercially available and are fully described in the literature, for example in "Surface Active Agents and Detergents", Volumes I and II, by Schwartz, Perry and Berch.

The preferred detergent-active compounds which can be used are soaps and synthetic non-soap anionic and nonionic compounds.

Soap is a water-soluble or water-dispersible alkali metal salt of an organic acid, and the preferred soaps are sodium or potassium salts, or the corresponding ammonium or substituted ammonium salts of an organic acid. Examples of suitable organic acids are natural or synthetic aliphatic carboxylic acids of from 10 to 22 carbon atoms, especially the fatty acids of triglyceride oils such as tallow, coconut oil and rape seed oil.

The soap which is most preferred is a soap derived from rape seed oil. When soap derived from tallow fatty acids is chosen, then fatty acids derived from tallow class fats, for example beef tallow, mutton tallow, lard, palm oil and some vegetable butters can be selected. Minor amounts of up to about 30%, preferably 10 to 20%, by weight of sodium soaps of nut oil fatty acids derived from nut oils, for example coconut oil and palm kernel oil, may be admixed with the sodium tallow soaps, to improve their lathering and solubility characteristics if desired. Whereas tallow fatty acids are predominantly $C_{14}$ and $C_{18}$ fatty acids, the nut oil fatty acids are of shorter chain length and are predominantly $C_{10}$-$C_{14}$ fatty acids.

Synthetic anionic non-soap detergent active compounds are usually water-soluble alkali metal salts of organic sulphates and sulphonates having alkyl radicals containing from about 8 to about 22 carbon atoms, the term alkyl being used to include the alkyl portion of higher aryl radicals.

Preferred examples of suitable anionic detergent compounds are sodium and potassium alkyl sulphates, especially those obtained by sulphating higher ($C_8$-$C_{18}$) alcohols produced for example from tallow or coconut oil; sodium, potassium and ammonium alkyl benzene sulphonates, particularly linear alkyl benzene sulphonates having from 10 to 16, especially from 11 to 13 carbon atoms in the alkyl chain; sodium alkyl glyceryl ether sulphates, especially those ethers of the higher alcohols derived from tallow or coconut oil and synthetic alcohols derived from petroleum; sodium coconut oil fatty acid monoglyceride sulphates and sulphonates; sodium and potassium salts of sulphuric acid esters of higher ($C_9$-$C_{18}$) fatty alcohol-alkylene oxide, particularly ethylene oxide, reaction products; the reaction products of fatty acids such as coconut fatty acids esterified with isethionic acid and neutralised with sodium hydroxide; sodium and potassium salts of fatty acid amides of methyl taurine; alkane monosulphonates such as those derived by reacting alpha-olefins ($C_8$-$C_{20}$) with sodium bisulphite and those derived by reacting paraffins with $SO_2$ and $Cl_2$ and then hydrolysing with a base to produce a random sulphonate; olefin sulphonates, which term is used to describe the material made by reacting olefins, particularly $C_{10}$-$C_{20}$ alpha-olefins, with $SO_3$ then neutralising and hydrolysing the reaction product; or mixtures thereof. The preferred anionic detergent compounds are sodium ($C_{11}$-$C_{15}$) alkyl benzene sulphonates and sodium ($C_{16}$-$C_{18}$) alkyl sulphates.

Examples of suitable nonionic detergent compounds which may be used include the reaction products of alkylene oxides, usually ethylene oxide, with alkyl ($C_6$-$C_{22}$) phenols, generally 2 to 25 EO, i.e. 2 to 25 units of ethylene oxide per molecule; the condensation products of aliphatic ($C_8$-$C_{25}$) primary or secondary linear or branched alcohols with ethylene oxide, generally 2 to 30 EO, and products made by condensation of ethylene oxide with the reaction products of propylene oxide and ethylenediamine. Other so-called nonionic detergent compounds include long-chain tertiary amine oxides, long-chain tertiary phosphine oxides and dialkyl sulphoxides.

Mixtures of detergent-active compounds, for example mixed anionic or mixed anionic and nonionic compounds, are preferably used in the detergent compositions.

Cationic, amphoteric or zwitterionic detergent-active compounds optionally can also be used in the detergent compositions, but this is not normally desired owing to their relatively high cost. If any cationic, amphoteric or zwitterionic detergent-active compounds are used, it is generally in small amounts in products based on the much more commonly used synthetic anion and/or nonionic detergent-active compounds.

The detergent active component of the detergent powder composition will generally comprise from 5 to 40%, preferably from 8 to 30% by weight of the composition, and can be incorporated into the composition by spray-drying, spray-on or as a separately prepared adjunct.

<u>Bleaching materials</u>

Bleaching materials include peroxy bleach compounds, such as inorganic persalts and organic peracids. Inorganic persalts can be used in combination with suitable transition metal catalysts or organic peracid precursors as activators for the persalt. Preferably, peroxy bleach compounds are employed together with an activator therefor.

The inorganic persalt, acts to release active oxygen in solution, and the activator therefor is usually an organic compound having one or more reactive acyl residues, which cause the formation of peracids, the latter providing a more effective bleaching action at a low temperature, that is, in the range from 20 to 60°C, than is possible with the inorganic persalt itself.

The ratio by weight of the peroxy bleach compound to the activator in the detergent composition may vary from 30:1 to about 1:1, preferably from 15:1 to 2:1.

Typical examples of suitable peroxy bleach compounds are inorganic persalts such as alkali metal perborates, both tetrahydrates and monohydrates, alkali metal percarbonates, persilicates and perphosphates and mixtures thereof. Sodium perborate is the preferred inorganic persalt, particularly sodium perborate monohydrate and sodium perborate tetrahydrate.

Activators for peroxy bleach compounds include:

a) N-diacylated and N,N'-polyacylated amines, for example N,N,N'N'-tetraacetyl methylenediamine and N,N,N'N'-tetraacetyl ethylenediamine, N,N-diacetylaniline, N,N-diacetyl-p-toluidine; 1,3-diacylated hydantoins such as, for example, 1,3-diacetyl-5,5-dimethyl hydantoin and 1,3-dipropionyl hydantoin; alpha-acetoxy-(N,N')-polyacylmalonamide, for example alpha-acetoxy-(N,N')-diacetylmalonamide;

b) N-alkyl-N-sulphonyl carbonamides, for example the compounds N-methyl-N-mesyl-acetamide, N-methyl-N-mesyl-benzamide, N-methyl-N-mesyl-p-nitrobenzamide and N-methyl-N-mesyl-p-methoxybenzamide;

c) N-acylated cyclic hydrazides, acylated triazones or urazoles, for example monoacetylmaleic acid hydrazide;

d) O,N,N-trisubstituted hydroxylamines, for example O-benzoyl-N,N-succinyl hydroxylamine, O-acetyl-N,N-succinyl hydroxylamine, O-p-methoxybenzoyl-N,N-succinyl hydroxylamine, O-p-nitrobenzoyl-N,N-succinyl hydroxylamine and O,N,N-triacetyl hyroxylamine;

e) N,N'-diacyl-sulphurylamides, for example N,N'-dimethyl-N,N'-diacetyl sulphurylamide and N,N'-diethyl-N,N'-dipropionyl sulphurylamide;

f) Triacylcyanurates, for example triacetyl cyanurate and tribenzoyl cyanurate;

g) Carboxylic acid anhydrides, for example benzoic anhydride, m-chloro-benzoic anhydride, phthalic anhydride and 4-chloro-phthalic anhydride.

h) Sugar esters, for example glucose pentaacetate;

i) Esters of sodium p-phenol sulphonate, for example sodium acetoxybenzene sulphonate, sodium benzoyloxybenzene sulphonate, and high acyl derivatives, for example linear and branched octanoyl and nonanoyl phenol sulphonic acid salts.

j)1,3-diacyl-4,5-diacyloxy-imidazoline, for example 1,3-diformyl-4,5-diacetoxy-imidazolidine, 1,3-diacetyl-4,5-diacetoxy-imidazoline, 1,3-diacetyl-4,5-dipropionyloxy-imidazoline;

k)N,N'-polyacylated glycoluril, for example N,N,N'N'-tetraacetyl glycoluril and N,N,N'N'-tetrapropionylglycoluril;

l) Diacylated-2,5-diketopiperazine, for example 1,4-diacetyl-2,5-diketopiperazine, 1,4-dipropionyl-2,5-diketopiperazine and 1,4-dipropionyl-3,6-dimethyl-2,5-diketopiperazine;

m) Acylation products of propylenediurea or 2,2-dimethyl-propylenediurea (2,4,6,8-tetraazabicyclo-(3,3,1)-nonane-3,7-dione or its 9,9-dimethyl derivative), especially the tetraacetyl- or the tetrapropionyl-propylenediurea or their dimethyl derivatives;

n) Carbonic acid esters, for example the sodium salts of p-(ethoxycarbonyloxy)-benzoic acid and p-(propoxy-carbonyloxy)-benzene sulphonic acid.

The N-diacetylated and N,N'-polyacylated amines mentioned under (a) are of special interest, particularly N,N,N'N'-tetraacetyl ethylenediamine (TAED).

Mixtures of one or more of the forgoing activators can be employed in the bleaching compositions.

It is preferred to use the activator in granular form, especially when it is present in a finely divided form.

Specifically, it is preferred to employ an activator having an average particle size of less than 150 µm, which gives significant improvement in bleach efficiency. The sedimentation losses, when using an activator with an average particle size of less than 150 µm, are substantially decreased. Even better bleach performance is obtained if the average particle size of the activator is less than 100 µm. However, too small a particle size gives increased decomposition, dust formation and handling problems, and although particle sizes below 100 µm can provide an improved bleaching efficiency, it is desirable that the activator should not have more than 20% by weight of particles with a size of less than 50 µm. On the other hand, the activator may have a certain amount of particles of a size greater than 150 µm, but it should not contain more than 5% by weight of particles >300 µm, and not more than 20% by weight of particles >150 µm. If needle-shaped crystalline activator particles are used, these sizes refer to the needle diameter. It is to be understood that these particle sizes refer to the activator present in the granules, and not to the granules themselves. The latter generally have on average a particle size of from 100 to 2000 µm, preferably 250 to 1000 µm. Up to 5% by weight of granules with a particle size of >1600 µm and up to 10% by weight of granules < 250 µm is tolerable. The granules incorporating the activator, preferably in this finely divided form, may be obtained by granulating the activator with a suitable carrier material, such as sodium tripolyphosphate and/or potassium tripolyphosphate. Other granulation methods, for example using organic and/or inorganic granulation aids, can also usefully be applied. The granules can be subsequently dried, if required. Generally, any granulation process is applicable, so long as the granule contains the activator, and so long as the other materials present in the granule do not inhibit the activator.

The bleaching material component when present will generally comprise from 1 to 30%, preferably from 5 to 20% by weight of the detergent composition.

Detergency builders

Builders include soaps, inorganic and organic water-soluble builder salts, as well as various water-insoluble and so-called "seeded" builders, whose function is to soften hard water by solubilisation or by removal by other means (e.g. by sequestration, precipitation or ion exchange) of calcium and to a lesser extent magnesium salts responsible for water hardness, thereby improving detergency.

Soaps which can function as detergency builders are those as defined hereinbefore as capable of functioning also as detergent active compounds.

Inorganic detergency builders include, for example, water-soluble salts of phosphates, pyrophosphates, orthophosphates, polyphosphates, phosphonates, and polyphosphonates. Specific examples of inorganic phosphate builders include sodium and potassium tripolyphosphates, phosphate and hexametaphosphates. The polyphosphonates can specifically include, for example, the sodium and potassium salts of ethylene disphosphonic acid, the sodium and potassium salts of ethane 1-hydroxy-1,1-diphosphonic acid, and the sodium and potassium salts of ethane-1,1,2-triphosphonic acid. Sodium tripolyphosphate is an especially preferred, water-soluble inorganic builder.

Non-phosphorus-containing inorganic water-soluble sequestrants can also be selected for use as detergency builders. Specific examples of such non-phosphorus, inorganic builders include borate, silicate and aluminate salts. The alkali metal, especially sodium or potassium, salts are particularly preferred.

Organic non-phosphorus-containing, water-soluble detergency builders include, for example, the alkali metal, ammonium and substituted ammonium polyacetates, carboxylates, polycarboxylates, succinates, oxalates and polyhydroxysulphonates. Specific examples of the polyacetate and polycarboxylate builder salts include sodium, potassium, lithium, ammonium and substituted ammonium salts of ethylenediamine tetraacetic acid, nitrilotriacetic acid, oxydisuccinic acid, mellitic acid, benzene polycarboxylic acids, citric acid, carboxymethyoxysuccinic acid, carboxymethyoxymalonic acid and mixtures thereof.

Highly preferred organic water-soluble non-phosphorus-containing builders include sodium citrate, sodium oxydisuccinate, sodium mellitate, sodium nitrilotriacetate, and sodium ethylenediaminetetraacetate. Other builders can include organic polymers such as polyacrylates, maleate, acetal carboxylates and copolymers.

Another type of detergency builder material useful in the compositions and products of the invention comprise a water-soluble material capable of forming a water-insoluble reaction product with water hardness cations, such as alkali metal or ammonium salts of carbonate, bicarbonate and sesquicarbonate optionally in combination with a crystallisation seed which is capable of providing growth sites for said reaction product.

Other types of builder that can be used include various substantially water-insoluble materials which are capable of reducing the hardness content of laundering liquors by an ion-exchange process.

Examples of such ion-exchange materials are the complex aluminosilicates, i.e. zeolite-type materials, which are useful presoaking or washing adjuncts which soften water by removal of calcium ion. Both the naturally occurring and synthetic "zeolites", especially Zeolite A and hydrated Zeolite A materials, are useful as builders.

The detergency builder component when present will generally comprise from about 1% to 90%, preferably from about 5% to 75% by weight of the detergent composition.

Other ingredients

Further ingredients which can optionally be employed in the detergent compositions of the invention include anti-redeposition agents such as sodium carboxymethyl-cellulose, polyvinyl pyrrolidone and the cellulose ethers such as methyl cellulose and ethyl hydroxyethyl cellulose; stabilisers such as ethylenediamine tetramethylene phosphonate and diethylenetriamine pentamethylene phosphonate; fabric-softening agents; inorganic-salts such as sodium and magnesium sulphate; and - usually present in very minor amounts - optical brighteners, fluorescers, enzymes such as proteases and amylases, anti-caking agents, thickeners, germicides and colourants.

Various detergency enzymes well-known in the art for their ability to degrade and aid in the removal of various soils and stains can also optionally be employed in the compositions according to this invention. Detergency enzymes are commonly used at concentrations of from about 0.1% to about 1.0% by weight of such compositions. Typical enzymes include the various proteases, lipases, amylases, and mixtures thereof, which are designed to remove a variety of soils and stains from fabrics.

It may also be desirable to include one or more antideposition agents in the compositions of the invention, to decrease a tendency to form inorganic deposits on washed fabrics. The amount of any such antideposition agent when employed is normally from 0.1% to 5% by weight, preferably from 0.2% to 2.5% by weight of the composition. The preferred antideposition agents are anionic polyelectrolytes, especially polymeric aliphatic carboxylates, or organic phosphonates.

It may also be desirable to include in the detergent compositions an amount of an alkali metal silicate, particularly sodium ortho-, meta- or preferably neutral or alkaline silicate. The presence of such alkali metal silicates at levels of at least 1%, and preferably from 5% to 15% by weight of the product, is advantageous in decreasing the corrosion of metal parts in washing machines, besides providing some measure of building and giving processing benefits and generally improved powder properties. The more highly alkaline ortho- and meta-silicates would normally only be used at lower amounts within this range, in admixture with the neutral or alkaline silicates.

The detergent compositions of the invention are usually required to be alkaline, but not too strongly alkaline as this could result in fabric damage and also be hazardous for domestic use. In practice the compositions should preferably provide a pH of from about 8.5 to about 11 in use in the aqueous wash liquor. It is preferred in particular for domestic products to yield a pH of from about 9.0 to about 10.5, as lower pH values tend to be less effective for optimum detergency, and more highly alkaline products can be hazardous if misused. The pH is measured at the lowest normal usage concentration of 0.1% w/v of the product in water of 12°H (Ca) (French permanent hardness, calcium only) at 50°C so that a satisfactory degree of alkalinity can be assured in use at all normal product concentrations.

The total amount of detergent adjuncts that can be incorporated into the detergent compositions according to the invention will normally form the balance of the product after accounting for the antifoam ingredient and the detergent-active compound. The detergent adjuncts will accordingly form from 0 to 94.9% by weight of the product.

Use of Detergent Composition

The detergent composition can be employed in a normal domestic or other laundry or dishwashing process conveniently employing a washing machine. It is intended that the product is effective both in removing soil from dishes and other household implements or from fabrics being washed, and in conferring other attributes such as bleaching, perfuming and fabric softening as appropriate.

For most purposes, the detergent composition can be employed at a concentration of 0.05 to 5% by weight of the wash liquor. Preferably, the concentration in the wash is from 0.2 to 2%, most preferably from 0.3 to 1.5% by weight of the wash liquor.

EXAMPLES

The invention is illustrated by the following non-limiting Examples.

Example 1

This Example describes an antifoam ingredient according to the preferred embodiment of the invention containing crystal-growth-modified Burkeite as carrier.

Preparation of modified Burkeite carrier

An aqueous slurry was prepared as follows:

(i) a 25% by weight aqueous solution of sodium polyacrylate having a molecular weight of about 3500 (Versicol ES ex Allied Colloids) was diluted with water;

(ii) the diluted solution of the polymer was heated to 45°C and sodium carbonate was added with stirring;

(iii) the dispersion containing sodium carbonate was heated to 65°C and sodium sulphate added with continuous stirring;

(iv) the slurry so obtained was allowed to equilibrate for 15 minutes during which time the viscosity increased with the formation of crystals of Burkeite. A check was made at this point to ensure that the average crystal size did not exceed about 20 μm;

(v) 250 kg of the slurry now containing about 55% by weight of water was spray-dried in a 1.8 m diameter spray drying tower using air inlet/outlet temperatures of 275° to 85°C and an air rate of 30 to 35 kg/min. The powder so formed was airlifted using an air powder mass flow ratio of 4:1. The average Burkeite crystal size was from 10 to 20 μm, but some agglomeration took place to provide a mean particle size of 300 μm. The mean pore volume was 0.45 $cm^3/g$, and the median pore diameter was 2.6 μm.

The formulation of the slurry was as follows:

| | % w/w |
|---|---|
| Sodium polyacrylate | 0.2 |
| Sodium carbonate | 12 |
| Sodium sulphate | 33 |
| Water | 54.8 |

Preparation of the antifoam ingredient

The antifoam ingredient was prepared in the following manner:

(i) 68 kg of the spray-dried Burkeite was placed in a 1 m Eirich pan granulator;

(ii) 18 kg of a mixture of 16.2 kg silicone oil and 1.8 kg hydrophobic silica was sprayed at room temperature onto the inclined rotating bed of Burkeite over a period of 10 minutes;

(iii) 12 kg of a mixture of 2.4 kg stearyl phosphate and 9.6 kg petroleum jelly at a temperature of 75 to 80°C was then sprayed onto the inclined rotating bed of Burkeite carrying the silicone oil and hydrophobic silica over a further period of 10 minutes;

(iv) the antifoam ingredient as a free flowing powder was fluidised with ambient air and sieved to remove coarse particles (>1700μm) and fines (<250μm).

Thus the formulation of the antifoam ingredient was as follows:

| | kg | weight % |
|---|---|---|
| Polymer-modified Burkeite | 68.0 | 69.4 |
| Silicone oil | 16.2 | 16.5 |
| Hydrophobic silica | 1.8 | 1.8 |
| Alkyl phosphate | 2.4 | 2.5 |
| Petroleum jelly | 9.6 | 9.8 |

It will be seen that, of the total antifoam materials present, the silicone oil and hydrophobic silica constituted 60% by weight and the alkyl phosphate and petroleum jelly constituted 40% by weight; the antifoam active substances (silicone oil and petroleum jelly) constituted about 80% by weight of the total, and the antifoam promoters (hydrophobic silica and alkyl phosphate) about 20%.

Preparation of detergent powder composition containing the antifoam ingredient

A detergent powder composition was prepared by conventional spray-drying, sodium perborate and the antifoam ingredient then being post-dosed. The composition had the following formulation:

| | % w/w |
|---|---|
| linear alkylbenzene sulphonate | 9 |
| $C_{13}$–$C_{15}$ fatty alcohol (ethoxylated) | 4 |
| sodium tripolyphosphate | 21.5 |
| alkaline silicate | 5.6 |
| tetraacetylethylenediamine | 4.6 |
| sodium sulphate | 31 |
| sodium carbonate | 3 |
| sodium perborate monohydrate | 5 |
| minor ingredients | 3.3 |
| antifoam ingredients | 6 |
| water | 7 |

This powder showed excellent storage properties, so far as its antifoam activity was concerned.

Example 2

The procedure of Example 1 was repeated, but during the preparation of the antifoam ingredient an additional process step was carried out between steps (iii) and (iv): the slightly tacky granules obtained in step (iii) were dusted with 2 kg of hydrophobic silica to render them especially free-flowing. Fluidising and sieving followed.
The antifoam ingredient had the following composition:

| | kg/weight% |
|---|---|
| Polymer-modified Burkeite | 68.0 |
| Silicone oil | 16.2 |
| Hydrophobic silica | 3.8 |
| Alkyl phosphate | 2.4 |
| Petroleum jelly | 9.6 |

The antifoam ingredient was postdosed to the detergent powder composition of Example 1. Storage and flow properties were excellent.

Example 3

An antifoam ingredient based on a different carrier, light soda ash, was prepared by the method described in Example 1. The composition was as follows:

| | kg | weight % |
|---|---|---|
| Light soda ash | 68.0 | 69.4 |
| Silicone oil | 16.2 | 16.5 |
| Hydrophobic silica | 1.8 | 1.8 |
| Alkyl phosphate | 2.4 | 2.5 |
| Petroleum jelly | 9.6 | 9.8 |

The light soda ash employed had a mean particle diameter of 130 µm, a pore volume of 0.3% $cm^3/g$ and a median pore diameter of 12.0 µm.

Example 4

The procedure of Example 3 was repeated, but with the additional process step described in Example 2: after the second spray-on step, but before fluidisation and sieving, 2 kg of hydrophobic silica were dusted onto the granules to render them especially free-flowing. The composition of the antifoam granules was as follows:

| | kg/weight% |
|---|---|
| Light soda ash | 68.0 |
| Silicone oil | 16.2 |
| Hydrophobic silica | 3.8 |
| Alkyl phosphate | 2.4 |
| Petroleum jelly | 9.6 |

Example 5

This Example describes the preparation of an antifoam granule based on the light soda ash used in Examples 3 and 4, on a larger scale using a slightly different method.

(i) 408 kg of light soda ash was placed in a cylindrical mixer with rotating internal blades, together with 97.2 kg silicone oil, 10.8 kg hydrophobic silica, 14.4 kg stearyl phosphate and 57.6 kg petroleum jelly.
(ii) These ingredients were mixed together at a temperature of 50°C.

The composition of the antifoam granules was as follows:

| | kg | weight % |
|---|---|---|
| Light soda ash | 408.0 | 69.4 |
| Silicone oil | 97.2 | 16.5 |
| Hydrophobic silica | 10.8 | 1.8 |
| Alkyl phosphate | 14.4 | 2.5 |
| Petroleum jelly | 57.6 | 9.8 |

Example 6

The procedure of Example 5 was followed, but after process step (ii) the slightly tacky granules obtained were coated after cooling by dusting with 12 kg hydrophobic silica to render them non-tacky.
The composition of the antifoam granules was as follows:

| | kg | weight % |
|---|---|---|
| Light soda ash | 408.0 | 68.0 |
| Silicone oil | 97.2 | 16.2 |
| Hydrophobic silica | 22.8 | 3.8 |
| Alkyl phosphate | 14.4 | 2.4 |
| Petroleum jelly | 57.6 | 9.6 |

Example 7

This Example describes an antifoam ingredient based on a sodium sesquicarbonate carrier.

Preparation of sodium sesquicarbonate carrier

An aqueous slurry was prepared as follows:

(i) a 25% by weight aqueous solution of sodium polyacrylate having a molecular weight of about 3500 (Versical E5 ex Allied Colloids) was diluted with water;
(ii) the diluted solution of the polymer was heated to 45°C and sodium carbonate was added with stirring;
(iii) the dispersion containing sodium carbonate was heated to 65°C and sodium bicarbonate added with continuous stirring;
(iv) the slurry so obtained was allowed to equilibrate for 15 minutes during which time the viscosity increased with the formation of crystals of sodium sesquicarbonate. A check was made at this point to ensure that the average crystal size did not exceed about 20μm;

(v) 250 kg of the slurry now containing about 55% by weight of water was spray-dried in a 1.8 m diameter spray drying tower using air inlet/outlet temperatures of 275° to 85°C and an air rate of 30 to 35 kg/min. The powder so formed was airlifted using an air to powder mass flow ratio of 4:1. The average sesquicarbonate crystal size was from 10 to 20 µm, but some agglomeration took place to provide a mean particle size of 321 µm. The mean pore volume was 0.55 $cm^3/g$, and the median pore diameter was 2.0 µm.

The formulation of the slurry was as follows:

| | % w/w |
|---|---|
| Sodium polyacrylate | 0.2 |
| Sodium carbonate | 27 |
| Sodium bicarbonate | 18 |
| Water | 54.8 |

Preparation of the antifoam ingredient

The antifoam ingredient was prepared in the following manner:

(i) 25 kg of the spray-dried sodium sesquicarbonate was placed in a 1m Eirich pan granulator;
(ii) 5 kg of a mixture of stearyl phosphate and petroleum jelly (at a weight ratio of 15:85) at a temperature of 75 to 80°C was sprayed on the inclined rotating bed of sodium sesquicarbonate over a period of 10 minutes;
(iii) the antifoam ingredient as a free flowing powder was fluidised with ambient air and sieved to remove coarse particles (>1700µm) and fines (<250µm).

The composition of the antifoam ingredient was as follows:

| | kg | weight % |
|---|---|---|
| Sodium sesquicarbonate | 25.0 | 83.3 |
| Alkyl phosphate | 0.75 | 2.5 |
| Petroleum jelly | 4.25 | 14.2 |

Preparation of detergent powder composition containing the antifoam ingredient

A detergent powder composition was prepared by conventional spray-drying, sodium perborate and the antifoam ingredient being post-dosed. The composition had the following formulation:

| | % w/w |
|---|---|
| linear alkylbenzene sulphonate | 9 |
| $C_{13}$–$C_{15}$ fatty alcohol (ethoxylated) | 4 |
| sodium tripolyphosphate | 32.6 |
| alkaline silicate | 6 |
| sodium carboxymethyl cellulose | 0.5 |
| EDTA | 0.14 |
| sodium sulphate | 12.76 |
| sodium carbonate | 5 |
| sodium perborate tetrahydrate | 15 |
| antifoam ingredient | 5 |
| water | 10 |

This powder showed excellent storage properties, so far as its antifoam activity was concerned.

Example 8

An antifoam ingredient was prepared as described in Example 7, except that the sodium sesquicarbonate carrier contained in the pan granulator was sprayed with a silicone oil mixed with hydrophobic silica and then dry-mixed with hydrophobic silica in powder form to render the antifoam ingredient less sticky.

When post-dosed to the detergent powder composition used in Example 7, the powder composition showed excellent long term storage properties, so far as antifoam activity was concerned, as well as enhanced antifoam properties when the detergent powder composition was used in the washing of fabrics.

Example 9

An antifoam ingredient was prepared as described in Example 7, except that the sodium sesquicarbonate carrier contained in the pan granulator was sprayed first with stearyl phosphate and petroleum jelly and subsequently with a mixture of silicone oil and hydrophobic silica.

When post-dosed to the detergent powder composition of Example 7, the powder composition showed excellent long term storage properties, so far as antifoam activity was concerned, as well as enhanced antifoam properties when the detergent powder composition was used in the washing of fabrics.

Example 10

An antifoam ingredient was prepared as described in Example 7, except that the sodium sesquicarbonate carrier contained in the pan granulator was sprayed first with a mixture of silicone oil and hydrophobic silica and subsequently with a mixture of stearyl phosphate and petroleum jelly.

When post-dosed to the detergent powder composition of Example 7, the powder composition showed excellent long term storage properties, so far as antifoam activity was concerned, as well as enhanced antifoam properties when the detergent powder composition was used in the washing of fabrics.

Example 11

An antifoam ingredient was prepared as described in Example 10, except that spray dried sodium carbonate monohydrate was employed as the carrier in place of sodium sesquicarbonate.

The sodium carbonate monohydrate had a mean particle size of 300 μm, a mean pore volume of 0.43 $cm^3/g$ and a median pore diameter of 5.0 μm.

Examples 12 & 13

In this Example, the storage stabilities of two antifoam granules according to the invention were compared with that of an antifoam granule based on a non-porous carrier, sodium perborate tetrahydrate. All three granules were prepared by spraying a mixture of silicone oil and hydrophobic silica (DB100) on-to the carrier material, and their compositions were as follows:

| | Weight % | | |
|---|---|---|---|
| | 12 | 13 | A |
| Light soda ash | 80.0 | – | – |
| Modified Burkeite | – | 80.0 | – |
| Sodium perborate tetrahydrate | – | – | 90.0 |
| Silicone oil/hydrophobic silica | 20.0 | 20.0 | 10.0 |

The porosity characteristics of the three carrier materials were as follows:

| | Pore volume ($cm^3/g$) | Median pore diameter (μm) |
|---|---|---|
| Light soda ash | 0.3 | 12 |
| Modified Burkeite | 0.5 | 3 |
| Sodium perborate tetrahydrate | 0 | – |

Because of the non-porous nature of sodium perborate tetrahydrate, it was not possible to prepare a granule containing 20% antifoam substance, so a granule containing 10% antifoam substance was prepared.

The granules were postdosed to spray-dried detergent powders of the formulation given in Example 7, at levels of 5% by weight in the case of granules 12 and 13 and at a level of 10% by weight in the case of granule A so that the concentration of antifoam active substance in the whole powder in each case was 1% by weight.

The storage stability of each powder sample with respect to antifoam properties was determined by measuring foam heights developed in the wash using both freshly prepared powder, and powder that had been stored for 1 month at 37°C. For these tests, a Miele (Trade Mark) 756 washing machine was used to wash a 2.5 kg clean cotton load, using the main 40°C wash cycle only; 200 g of powder was used for each wash, and the water inlet temperature was 10°C. The results were as follows:

| Granule | Time in wash (min) | Foam height (cm) | |
|---|---|---|---|
| | | Fresh powder | Stored powder |
| A | 20 | 0.1 | 10 |
| | 30 | 0.25 | 10 |
| | 40 | 0.5 | 10 |
| 12 | 20 | 0.25 | 1.25 |
| | 30 | 0.3 | 2.5 |
| | 40 | 1.0 | 4.5 |
| 13 | 20 | 0.5 | 1.0 |
| | 30 | 2.0 | 4.0 |
| | 40 | 4.0 | 7.0 |

These results show that silicone-based antifoam material carried on non-porous sodium perborate tetrahydrate soon undergoes gross deactivation on storage in detergent powders, while the porous carbonate-based carriers used in accordance with the invention give improved stability.

Example 14

This Example demonstrates the benefits of including a small proportion of nonionic surfactant in an antifoam ingredient according to the invention that includes a silicone oil as antifoam active substance.

Two antifoam ingredients according to the invention were prepared. The first was as Example 4, and was prepared as described in that Example: first silicone oil and hydrophobic silica were sprayed onto the light soda ash carrier, then alkyl phosphate and petroleum jelly were sprayed on as a separate operation, then additional hydrophobic silica was dusted onto the resulting granules. The second antifoam ingredient (Example 14) was similar except that nonionic surfactant ($C_{13-15}$ aliphatic alcohol 7EO) was premixed with the silicone oil/hydrophobic silica mixture before the latter was sprayed on: the amount of nonionic surfactant used was 3% by weight based on the total antifoam ingredient, and replaced 3% by weight of the light soda ash carrier. The formulations of the two antifoam ingredients were accordingly as follows:

| | weight % | |
|---|---|---|
| | 4 | 14 |
| Light soda ash | 68.0 | 65.0 |
| Silicone oil/hydrophobic silica | 18.0 | 18.0 |
| Nonionic surfactant | - | 3.0 |
| Alkyl phosphate | 2.4 | 2.4 |
| Petroleum jelly | 9.6 | 9.6 |
| Added hydrophobic silica | 2.0 | 2.0 |

The two antifoam ingredients were each postdosed at a level of 1.5% to a detergent composition as described in Example 7. The resulting detergent powders were each used repeatedly to wash loads each consisting of 82 blue polyester/cotton (50/50) napkins in a Miele W 753 washing machine, using the 40°C wash cycle, water of 30° French hardness, and a 324 g dose of powder; and the number of napkins per load exhibiting "spotting" was determined.

The powder containing Antifoam Ingredient 4 gave an average of 4-5 "spotted" napkins per load, while no "spotted" napkins were detected in the loads washed with the powder samples containing Antifoam Ingredient 14.

**Claims**

1. A particulate antifoam ingredient suitable for incorporation into a detergent powder composition, the ingredient comprising:
(i) an antifoam material comprising at least one hydrophobic antifoam active substance at least partially liquid at a temperature within the range of from 5 to 90°C, sorbed onto
(ii) a water-soluble inorganic carrier,
characterised in that the inorganic carrier (ii) is a porous absorbent material comprising sodium carbonate and having a mean particle diameter not exceeding 2000 μm, a pore volume of from 0.2 to 1.0 $cm^3/g$ and a median pore diameter not greater than 20 μm.

2. An antifoam ingredient as claimed in claim 1, characterised in that the pore volume of the inorganic carrier is from 0.25 to 1.0 $cm^3/g$.

3. An antifoam ingredient as claimed in claim 1 or claim 2, characterised in that the inorganic carrier (ii) is selected from light soda ash, polymer-modified sodium sesquicarbonate and polymer-modified Burkeite.

4. An antifoam ingredient as claimed in any one of claims 1 to 3, characterised in that the carrier (ii) having the antifoam material (i) sorbed thereon is superficially coated with a dusting of particulate hydrophobic silica.

5. An antifoam ingredient as claimed in any one of claims 1 to 4, characterised in that the median pore diameter of the inorganic carrier is not greater than 10 μm.

6. An antifoam ingredient as claimed in any one of claims 1 to 5, characterised in that the antifoam material (i) comprises
(a) an antifoam active substance at least partially liquid at a temperature within the range of from 5 to 90°C, selected from hydrocarbons, polysiloxanes and mixtures thereof, and, optionally,
(b) an antifoam promoter selected from
(b) (i) alkyl phosphoric acids or salts thereof, the acids having the structure:

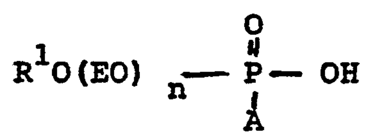
(1)

where A is -OH or $R^2O(EO)_m$-, $R^1$ and $R^2$ are the same or different $C_{12}$ to $C_{24}$, straight or branched chain, saturated or unsaturated alkyl groups, m and n are the same or different and are O, or an integer of from 1 to 6;
(b) (ii) hydrophobic silica; and
(b )(iii) mixtures thereof.

7. An antifoam ingredient as claimed in claim 6, characterised in that the antifoam material (i) comprises
(a)(i) a hydrocarbon,
(a)(ii) a polysiloxane,
(b)(i) an alkyl phosphoric acid or salt thereof, and
(b)(ii) hydrophobic silica.

8. An antifoam ingredient as claimed in claim 7, characterised in that the antifoam material (i) comprises
(a)(i) petroleum jelly,
(a)(ii) silicone oil,
(b)(i) an alkyl phosphate, and
(b)(ii) hydrophobic silica.

9. An antifoam ingredient as claimed in any one of claims 1 to 8, characterised in that the antifoam material comprises a polysiloxane and further comprises a nonionic surfactant.

10. An antifoam ingredient as claimed in claim 9, characterised in that the amount of nonionic surfactant is from 15 to 25% by weight based on the polysiloxane.

11. A process for the preparation of an antifoam ingredient as claimed in claim 1, characterised by the steps of:
(i) incorporating the antifoam ingredient onto the porous inorganic carrier, and
(ii) optionally coating the carrier with a dusting of particulate hydrophobic silica.

12. A process as claimed in claim 11 for the preparation of an antifoam ingredient as claimed in claim 7 or claim 8, characterised by the steps of:
(i) spraying a mixture of polysiloxane and hydrophobic silica onto the porous inorganic carrier;
(ii) subsequently spraying a mixture of hydrocarbon and alkyl phosphoric acid or salt thereof onto the porous inorganic carrier; and
(iii) optionally coating the carrier with a dusting of particulate hydrophobic silica.

13. A process as claimed in claim 11 for the preparation of an antifoam ingredient as claimed in claim 9 or claim 10, characterised by the step of spraying a mixture of polysiloxane and nonionic surfactant onto the porous inorganic carrier.

14. A process as claimed in claim 13, characterised by the steps of:
(i) spraying a mixture of polysiloxane, nonionic surfactant and hydrophobic silica onto the porous inorganic carrier;
(ii)subsequently spraying a mixture of hydrocarbon and alkyl phosphoric acid or salt thereof onto the porous inorganic carrier; and
(iii)optionally coating the carrier with a dusting of particulate hydrophobic silica.

## Revendications

1. Un agent antimousseux particulaire approprié pour être incorporé dans une composition de poudre détergente, l'agent comprenant:
(i) un matériau antimousseux comprenant au moins une substance active antimousseuse hydrophobe au moins partiellement liquide à une température comprise entre 5 et 90°C sorbée sur
(ii) un support minéral absorbant, poreux,
caractérisé en ce que le support minéral (ii) est un matériau absorbant poreux comprenant du carbonate de sodium ayant un diamètre moyen de particule n'excédant pas 2000 µm, un volume de pore de 0,2 à 1,0 $cm^3$/grammes et un diamètre de pore moyen n'excédant pas 20 µm.
2. Un agent antimousseux selon la revendication 1, caractérisé en ce que le volume de pore du support minéral va de de 0,25 à 1,0 $cm^3/g$.
3. Un agent antimousseux selon la revendication 1 ou la revendication 2, caractérisé en ce que le support minéral (ii) est choisi à partir de cendre de carbonate Solvey légère, du sesquicarbonate de sodium à polymère modifié et du Burkeite à polymère modifié.
4. Un agent antimousseux selon l'une des revendications 1 à 3, caractérisé en ce que le support (ii) sur lequel est sorbé le matériau antimousseux (i) est revêtu superficiellement d'un saupoudrage de silice hydrophobe particulaire.
5. Un agent antimousseux selon l'une des revendications 1 à 4, caractérisé en ce que le diamètre moyen de pore du support minéral n'est pas supérieur à 10 µm.
6. Un agent antimousseux selon l'une des revendications 1 à 5, caractérisé en ce que le matériau antimousseux (i) comprend:
(a) une substance active antimousseuse au moins partiellement liquide à une température allant de 5 à 90°C qui est choisie à partir des hydrocarbures, des polysiloxanes et mélanges de ceux-ci, et, de façon optionnelle,
(b) un activeur antimousseux choisi à partir
(b) (i) des acides alkylphosphoriques ou sels de ceux-ci, les acides ayant la structure:

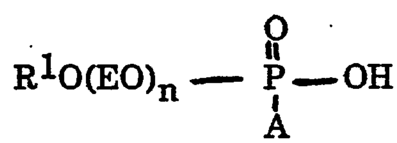

où A est –OH ou $R^2O(EO)_m$-, $R^1$ et $R^2$ sont identiques ou différents des groupes alkyles saturés ou insaturés $C_{12}$ à $C_{24}$, en chaîne droite ou ramifiée, m et n sont identiques ou différents et sont 0, ou un nombre entier de 1 à 6;
(b) (ii) de silice hydrophobe; et
(b) (iii) de mélanges de ceux-ci.
7. Un agent antimousseux selon la revendication 6, caractérisé en ce que le matériau antimousseux (i) comprend
(a) (i)un hydrocarbure,
(a) (ii) un polysiloxane,
(b) (i) un acide alkylphosphorique ou un sel de celui-ci, et
(b) (ii) de la silice hydrophobe.
8. Un agent antimousseux selon la revendication 7, caractérisé en ce que le matériau antimousseux (i) comprend
(a) (i) de la gelée de pétrole,
(a) (ii) de l'huile de silicium,
(b) (i) un alkylphosphate, et
(b) (ii) de la silice hydrophobe.
9. Un agent antimousseux selon l'une des revendications 1 à 8, caractérisé en ce que le matériau antimousseux comprend un polysiloxane et comprend de plus un agent de surface non ionique.
10. Un agent antimousseux selon la revendication 9, caractérisé en ce que la quantité d'agent de surface non ionique est de 15 à 25% en poids par rapport au polysiloxane.
11. Un procédé pour la préparation d'un agent antimousseux selon la revendication 1, caractérisé par les étapes consistant à:

(i) incorporer le matériau antimousseux sur le support minéral poreux, et
(ii) revêtir de façon optionnelle le support d'une poudre de silice hydrophobe particulaire.

12. Un procédé selon la revendication 11 pour la préparation d'un agent antimousseux selon la revendication 7 ou 8, caractérisé par les étapes consistant à:
(i) vaporisé un mélange de polysiloxane et de silice hydrophobe sur un support minéral poreux;
(ii) subséquemment vaporiser un mélange d'hydrocarbure et d'acide alkylphosphorique ou de sel de celui-ci sur un support minéral poreux; et
(iii) optionnellement revêtir le support avec un revêtement de silice hydrophobe particulaire.

13. Un procédé selon la revendication 11 pour la préparation d'un agent antimousseux selon la revendication 9 ou 10, caractérisé par l'étape consistant à vaporiser un mélange d'agents de surface polysiloxane et non ionique sur le support poreux minéral.

14. Un procédé selon la revendication 13 caractérisé par les étapes consistant à:
(i) vaporiser un mélange d'agents de surface polysiloxane, non ionique et une silice hydrophobe sur le support poreux minéral;
(ii) vaporiser ensuite un mélange d'hydrocarbure et d'acide alkylphosphorique ou un sel de ceux-ci sur le support poreux minéral; et
(iii) optionnellement revêtir le support avec un saupoudrage de silice hydrophobe particulaire.

## Patentansprüche

1. Teilchenförmiges Antischaummittel, das geeignet ist zur Einarbeitung in eine Detergens-Pulver-Zusammensetzung und das umfaßt:
(i) ein Antischaummaterial umfassend wenigstens eine hydrophobe Antischaum-aktive Substanz, die wenigstens teilweise flüssig ist bei einer Temperatur im Bereich von 5 bis 90°C, das auf
(ii) einem wasserlöslichen, anorganischen Träger sorbiert ist,
dadurch gekennzeichnet, daß der anorganische Träger (ii) ein poröses absorbierendes Material ist, das Natriumcarbonat umfaßt und einen mittleren Teilchendurchmesser nicht über 2000 µm, ein Porenvolumen von 0,2 bis 1,0 $cm^3/g$ und einen mittleren Porendurchmesser nicht größer als 20 µm aufweist.

2. Antischaummittel nach Anspruch 1, dadurch gekennzeichnet, daß das Porenvolumen des anorganischen Trägers zwischen 0,25 und 1,0 $cm^3/g$ liegt.

3. Antischaummittel nach Anspruch 1 oder Anspruch 2, dadurch gekennzeichnet, daß der anorganische Träger (ii) ausgewählt ist unter leichter calcinierter Soda, Polymer-modifiziertem Natrium-Sesquicarbonat und Polymer-modifiziertem Burkeit.

4. Antischaummittel nach einem der Ansprüche 1 bis 3, dadurch gekennzeichnet, daß der Träger (ii), auf den das Antischaummaterial (i) sorbiert ist, oberflächlich mit einer Bestäubung aus teilchenförmiger hydrophober Kieselsäure überzogen ist.

5. Antischaummittel nach einem der Ansprüche 1 bis 4, dadurch gekennzeichnet, daß der mittlere Porendurchmesser des anorganischen Trägers nicht größer als 10 µm ist.

6. Antischaummittel nach einem der Ansprüche 1 bis 5, dadurch gekennzeichnet, daß das Antischaummaterial (i) umfaßt:
(a) eine Antischaum-aktive Substanz, die wenigstens teilweise flüssig ist bei einer Temperatur im Bereich von 5 bis 90°C und ausgewählt ist unter Kohlenwasserstoffen, Polysiloxanen und Mischungen davon und gegebenenfalls
(b) einen Antischaum-Promotor ausgewählt unter
(b) (i) Alkyl-Phosphorsäuren oder Salzen davon, wobei die Säuren die Struktur:

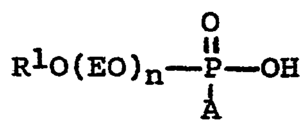

(1)

besitzen, worin A –OH oder $R^2O(EO)_m$- ist, $R^1$ und $R^2$ die gleichen oder unterschiedliche $C_{12}$ bis $C_{24}$, gerad- oder verzweigtkettige, gesättigte oder ungesättigte Alkylgruppen sind, m und n gleich oder unterschiedlich und 0 oder eine ganze Zahl von 1 bis 6 sind;
(b) (ii) hydrophober Kieselsäure; und
(b) (iii) Mischungen davon.

7. Antischaummittel nach Anspruch 6, dadurch gekennzeichnet, daß das Antischaummaterial (i)
(a) (i) einen Kohlenwasserstoff,
(a) (ii) ein Polysiloxan,
(b) (i) eine Alkylphosphorsäure oder Salz davon, und
(b) (ii) hydrophobe Kieselsäure umfaßt.

8. Antischaummittel nach Anspruch 7, dadurch gekennzeichnet, daß das Antischaummaterial (i)
(a) (i) Petrolatum
(a) (ii) Silikonöl,
(b) (i) ein Alkylphosphat, und
(b) (ii) hydrophobe Kieselsäure umfaßt.

9. Antischaummittel nach einem der Ansprüche 1 bis 8, dadurch gekennzeichnet, daß das Antischaummaterial ein Polysiloxan und weiterhin ein nicht-ionisches oberflächenaktives Material umfaßt.

10. Antischaummittel nach Anspruch 9, dadurch gekennzeichnet, daß die Menge an nicht-ionischem oberflächenaktivem Material 15 bis 25 Gew.-% auf der Grundlage des Polysiloxans beträgt.

11. Verfahren zur Herstellung eines Antischaummittels nach Anspruch 1, gekennzeichnet durch die folgenden Schritte:
(i) Einarbeiten des Antischaummittels in den porösen, anorganischen Träger und
(ii) gegebenenfalls Überziehen des Trägers mit einer Bestäubung aus teilchenförmiger hydrophober Kieselsäure.

12. Verfahren nach Anspruch 11, zur Herstellung eines Antischaummittels nach Anspruch 7 oder Anspruch 8, gekennzeichnet durch die folgenden Schritte:
(i) Aufsprühen einer Mischung aus Polysiloxan und hydrophober Kieselsäure auf den porösen anorganischen Träger;
(ii) nachfolgend Aufsprühen einer Mischung aus Kohlenwasserstoff und Alkylphosphorsäure oder einem Salz davon auf den porösen anorganischen Träger; und
(iii) gegebenenfalls Überziehen des Trägers mit einer Bestäubung aus teilchenförmiger hydrophober Kieselsäure.

13. Verfahren nach Anspruch 11 zur Herstellung eines Antischaummittels nach Anspruch 9 oder Anspruch 10, gekennzeichnet durch den Schritt des Aufsprühens einer Mischung aus Polysiloxan und nicht-ionischem oberflächenaktivem Material auf den porösen anorganischen Träger.

14. Verfahren nach Anspruch 13, gekennzeichnet durch die folgenden Schritte:
(i) Aufsprühen einer Mischung aus Polysiloxan, nichtionischem oberflächenaktivem Material und hydrophober Kieselsäure auf den porösen anorganischen Träger;
(ii) nachfolgend Aufsprühen einer Mischung aus Kohlenwasserstoff und Alkylphosphoräure oder einem Salz davon auf den porösen anorganischen Träger; und
(iii) gegebenenfalls Überziehen des Trägers mit einer Bestäubung aus teilchenförmiger hydrophober Kieselsäure.